# EUROPÄISCHE PATENTSCHRIFT

(11) **EP 2 987 664 B1**
(45) Veröffentlichungstag und Bekanntmachung des Hinweises auf die Patenterteilung: **02.05.2018**
(21) Anmeldenummer: 14002903.4
(22) Anmeldetag: 21.08.2014
(51) Int. Cl.: B60D 5/00

(54) **Übergang zwischen zwei gelenkig miteinander verbundenen Fahrzeugen**
passage between articulated vehicles
passage entre véhicules articulés

(43) Veröffentlichungstag der Anmeldung: 24.02.2016
(73) Patentinhaber: Hübner GmbH & Co. KG, 34123 Kassel (DE)
(72) Erfinder: Jünke, Volker, 34123 Kassel (DE)
(74) Vertreter: Patentanwälte Walther Hinz Bayer PartGmbB

(56) Entgegenhaltungen:
- EP-A1- 2 149 462
- EP-A1- 2 149 463

## Beschreibung

Die Erfindung betriff einen Übergang zwischen zwei gelenkig miteinander verbundenen Fahrzeugen, wobei der Übergang mindestens einen tunnelförmig umlaufenden Balg umfasst, wobei zur Verbindung des Balges mit der Stirnseite des Fahrzeugs eine Verbindungseinrichtung vorgesehen ist, wobei die Verbindungseinrichtung eine an der Stirnseite des Fahrzeugs angeordnete tunnelförmig umlaufende, im Querschnitt in etwa C-förmigen Aussparung aufweist, wobei mindestens ein Winkelprofil vorgesehen ist, das an seinem ersten freien Ende Mittel zur Erfassung des mindestens einen Balges aufweist, und an seinem zweiten Ende durch mindestens ein Profil mit der C-förmigen Aussparung verbunden ist.

Übergänge, insbesondere zwischen Fahrzeugen eines Schienenfahrzeuges, sind aus dem Stand der Technik hinreichend bekannt. Derartige Übergänge umfassen hierbei üblicherweise mindestens einen Balg, der eine Plattform oder eine Brücke überspannt, um Personen das Hinüberwechseln von einem Fahrzeug zum anderen Fahrzeug zu ermöglichen. Bekannt sind in diesem Zusammenhang auch sogenannte Doppelwellenbälge, das heißt zwei ineinander gelagerte Bälge, die insbesondere einen erhöhten Schallschutz bieten. Dies ist insbesondere relevant bei schnell fahrenden Zügen, wie beispielsweise dem ICE oder dem TGV. Problematisch ist ebenfalls, dass zwischen den einzelnen Fahrzeugen Nick-, Wank-, Knick- und auch Versatzbewegungen zugelassen werden müssen, wie sie beispielsweise auftreten, wenn ein solches Fahrzeug über eine Weiche fährt. Das heißt, dass der Balg durchaus in der Lage sein muss eine erhebliche Dehnfähigkeit bereitzustellen, um eben solche Bewegungen zuzulassen. Insbesondere bei Doppelwellenbälgen oder auch doppelten Faltenbälgen hat sich herausgestellt, dass die Anbindung der Bälge an der Stirnseite der gelenkig miteinander verbundenen Fahrzeuge durch eine entsprechende Verbindungseinrichtung sehr aufwendig ist.

Aus der EP 2 149 462 A1 ist in diesem Zusammenhang bekannt, den Balg durch ein Klemmprofil mit einem am Wagenkasten angeordneten C-förmigen Profil lösbar zu verbinden.

Die der Erfindung zugrunde liegende Aufgabe besteht darin, eine Verbindungseinrichtung für einen Balg und hier insbesondere auch für einen Doppelwellenbalg bereitzustellen, die wesentlich einfacher und preiswerter im Aufbau ist, aber dennoch sicher in der Lage ist, den Balg bzw. die beiden Bälge mit der Stirnseite des jeweiligen Fahrzeugs zu verbinden.

. Zur Lösung der Aufgabe wird erfindungsgemäß vorgeschlagen, dass das Profil als ein Elastomerprofil ausgebildet ist, das formschlüssig in der C-förmigen Aussparung des Fahrzeugs einliegt. Hieraus wird deutlich, dass die Verbindung des Balges mit der Stirnseite des jeweiligen Fahrzeuges im Wesentlichen durch eine Klemmverbindung mit mindestens einem Elastomerprofil bereitgestellt wird, wobei das Elastomerprofil in der C-förmigen Aussparung lagert. Dadurch, dass das Elastomerprofil formschlüssig durch die C-förmige Aussparung aufgenommen wird, wird verhindert, dass das Elastomerprofil aus der C-förmigen Aussparung herausgelangen kann,

Nach einem besonderen Merkmal der Erfindung ist vorgesehen, dass das zweite Ende des Winkelprofils nach Art eines Keders ausgebildet ist, und dieses nach Art eines Keders ausgebildete zweite Ende mit dem Elastomerprofil verbunden ist. Unter einem Keder wird gemeinhin eine wulstartige Verdickung verstanden, die sich an einen Steg anschließt, wobei der aufnehmende Teil, im vorliegenden Fall das Elastomerprofil, eine entsprechende Öffnung aufweist, wobei der Steg mit der wulstartigen Verdickung in die Öffnung des aufnehmenden Teils, also des Elastomerprofils, entweder eingeschoben oder eingepresst wird. Da im vorliegenden Fall der Balg, und entsprechend auch die C-förmige Aussparung umlaufend ausgebildet sind, wird man den nach Art eines Keders ausgebildeten Steg mit der wulstartigen Verdickung in das Elastomerprofil einpressen bzw. einschlagen.
Weiterhin zeichnet sich das Winkelprofil vorteilhaft dadurch aus, dass es an seinem ersten freien Ende den Balg durch eine klammerartige Klaue erfasst. Hierzu ist an dem Steg ein Schenkel, vorteilhaft im rechten Winkel zu dem Steg angeordnet, der endseitig die klammerartige Klaue als Mittel zur Erfassung des Balges aufweist. Der Balg selbst besteht aus einem beschichteten Gewebe bzw. aus einzelnen Balgelementen, die durch Nähen oder Vulkanisieren zu einem Balg zusammengesetzt sind, wobei die einzelnen Balgelemente ein Gewebe aufweisen, das mit einem Elastomer beschichtet ist. Durch die klammerartige Klaue des Winkelprofils wird nun das letzte, also das randseitige Balgelement erfasst. Zur sicheren Erfassung des Balges weist die klammerartige Klaue auf der Innenseite vorteilhaft eine Verzahnung auf.

Nach einer besonderen Variante ist vorgesehen, dass das mindestens eine Elastomerprofil zwei gleichartige Öffnungen zur Aufnahme jeweils eines Steges mit endseitiger wulstartiger Verdickung von zwei Winkelprofilen für jeweils einen Balg aufweist. Hierdurch wird die Möglichkeit eröffnet, zwei Bälge relativ nah beieinander durch eine C-förmige Aussparung mit mindestens einem in der C-förmigen Aussparung gelagerten Elastomerprofil aufzunehmen. Das heißt, es sind hierbei Abstände zwischen den Wellen eines Doppelwellenbalges zu verwirklichen, die bei etwa 70 bis 95 mm liegen. Dies eröffnet die Möglichkeit einer erheblichen Durchgangsweite im Bereich des Übergangs zwischen zwei gelenkig miteinander verbundener Fahrzeuge, sodass auch Rollstuhlfahrer von einem Waggon in den nächsten Waggon gelangen können.

Eine weitere Variante, die noch platzsparender ist, zeichnet sich dadurch aus, dass das mindestens eine Winkelprofil ein zweites Mittel zur Erfassung mindestens eines weiteren Balges aufweist. Das heißt, dass durch ein einziges Winkelprofil zwei Bälge erfasst werden, was die Wandstärke eines solchen Doppelwellenbalges noch weiterhin vermindert. Im Einzelnen ist in diesem Zusammenhang vorgesehen, dass der Schenkel des Winkelprofiles als Mittel zur Erfassung des mindestens einen weiteren Balges eine klammerartige Klaue aufweist. Hierbei ist die zweite Klaue vorteilhaft derart an dem Schenkel des Winkelprofils angebracht, dass die Bälge verschachtelt ineinander lagern. Dies hat den Vorteil, dass die Wandstärke des Doppelwellenbalges sehr gering gehalten werden kann. Diese klammerartige Klaue kann auf verschiedenste Art und Weise mit dem Schenkel des Winkelprofils verbunden sein, beispielsweise ist sie mit dem Schenkel verschraubt oder vernietet.

Anhand der Zeichnungen wird die Erfindung nachstehend beispielhaft näher erläutert.
- Fig. 1: zeigt schematisch einen Übergang zwischen zwei gelenkig miteinander verbundenen Fahrzeugen;
- Fig. 2: zeigt schematisch die Anbindung eines Doppelwellenbalges an der Stirnseite eines Fahrzeugs als erste Variante;
- Fig. 3: zeigt schematisch die Anbindung des Doppelwellenbalges an der Stirnseite eines Fahrzeugs als zweite Variante.

Die beiden Fahrzeuge 2 und 3 eines Schienenfahrzeugs 1 sind durch ein Gelenk (nicht dargestellt) miteinander verbunden. Zwischen den beiden Fahrzeugen 2, 3 ist ein Übergang 5 vorgesehen, der einen Balg umfasst, der eine Übergangsbrücke oder Plattform tunnelartig umspannt, wie dies aus dem Stand der Technik hinreichend bekannt ist.

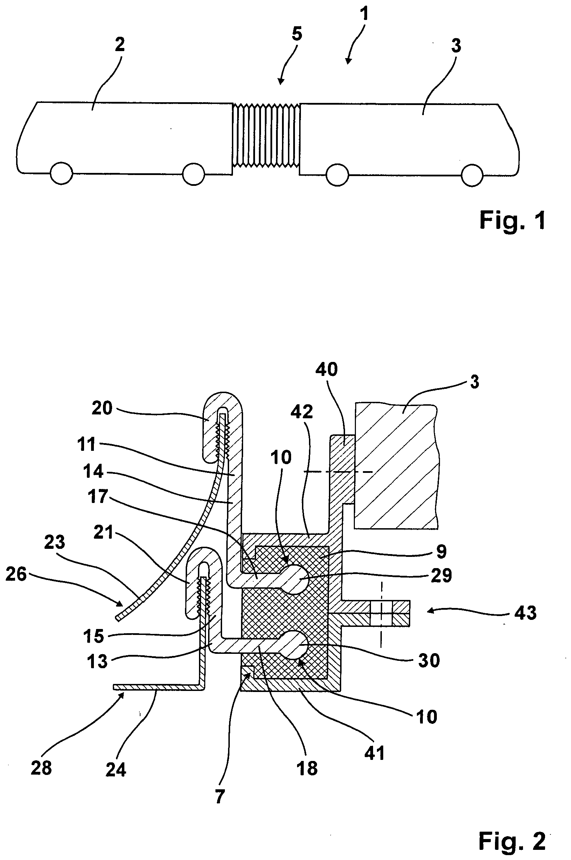

Fig. 2 zeigt nun die Anbindung eines Doppelwellenbalges eines Übergangs 5 an der Stirnseite eines Fahrzeuges 3 in einer ersten Variante. Hierbei weist das Fahrzeug 3 an seiner Stirnseite eine Aussparung 7 auf, die C-förmig ausgebildet ist, wie sich dies unmittelbar in Anschauung von Fig. 2 ergibt. In der C-förmigen Aussparung 7 befindet sich das Elastomerprofil 9. Die C-förmige Aussparung 7 wird gebildet durch das Gehäuse 40, das mit dem Fahrzeug 3 in Verbindung steht. Das Gehäuse 40 besitzt zwei Teilgehäuse 41, 42, die durch einen Flansch 43 miteinander verbunden sind, und so dass in der C-förmigen Aussparung ruhende Elastomerprofil 9 klemmend erfasst ist.

Das Elastomerprofil 9 dient der Aufnahme zweier Winkelprofile 11 und 13, die bis auf die Länge der Schenkel und der Stege im Wesentlichen identisch ausgebildet sind. Jedes Winkelprofil 11, 13 zeigt an seinem ersten freien Ende an den Schenkeln 14, 15 anschließend, eine klammerartige Klaue 20, 21 zur Aufnahme einer mit einem Elastomer beschichten Gewebebahn 23, 24 des Balges 26, 28. An dem anderen zweiten Ende weist der Schenkel einen Steg 17, 18 auf, der endseitig eine wulstartige Verdickung 29, 30 zeigt, wobei das Elastomerprofil 9 jeweils eine entsprechende Öffnung 10 zur Aufnahme des Steges mit der wulstartigen Verdickung besitzt. Durch das Einschlagen der beiden Stege 17, 18 des Winkelprofils 11, 13 in das Elastomerprofil 9 wird das Elastomerprofil 9 gespreizt, sodass es sicher in der C-förmigen Aussparung 7 einsitzt.

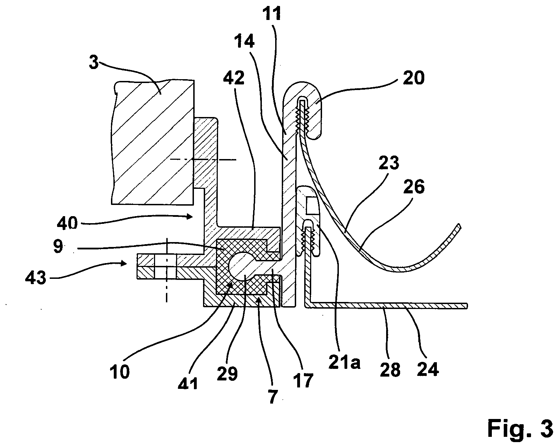

Die Variante gemäß Fig. 3 - gleichartige Teile sind hierbei mit den entsprechenden Bezugszeichen aus Fig. 2 versehen worden - unterscheidet sich von der gemäß Fig. 2 ausschließlich dadurch, dass hier das Winkelprofil 11 an seinem Schenkel 14 eine weitere Klaue 21a zur Aufnahme eines zweiten Balges 28 aufweist. Dadurch, dass die weitere Klaue 21a an dem Schenkel 14 des Winkelprofiles 11 angebracht ist, besteht die Möglichkeit, die beiden Bälge 26 und 28 noch weiter ineinander zu verschachteln, dass heißt noch platzsparender zu bauen, was schlussendlich zu einem noch geringeren Abstand der Wellen eines Doppelwellenbalges führt.

### Bezugszeichenliste:

- 1: Schienenfahrzeug
- 2: Fahrzeug
- 3: Fahrzeug
- 5: Übergang
- 7: C-förmige Aussparung
- 9: Elastomerprofil
- 10: Öffnung
- 11: Winkelprofil
- 13: Winkelprofil
- 14: Schenkel
- 15: Schenkel
- 17: Steg
- 18: Steg
- 20: klammerartige Klaue
- 21: klammerartige Klaue
- 21a: klammerartige Klaue
- 23: Gewebebahn
- 24: Gewebebahn
- 26: Balg
- 28: Balg
- 29: wulstartige Verdickung
- 30: wulstartige Verdickung
- 40: Gehäuse
- 41: Teilgehäuse
- 42: Teilgehäuse
- 43: Flansch

## Patentansprüche

1. Übergang (5) zwischen zwei gelenkig miteinander verbundenen Fahrzeugen (2, 3), wobei der Übergang (5) mindestens einen tunnelförmig umlaufenden Balg (26, 28) umfasst, wobei zur Verbindung des Balges (26, 28) mit der Stirnseite eines Fahrzeugs (2, 3) eine Verbindungseinrichtung vorgesehen ist,
wobei die Verbindungseinrichtung eine an der Stirnseite des Fahrzeugs (2, 3) angeordnete tunnelförmig umlaufende, im Querschnitt in etwa C-förmige Aussparung (7) aufweist, wobei mindestens ein Winkelprofil (11, 13) vorgesehen ist, das an seinem ersten freien Ende Mittel zur Erfassung des mindestens einen Balges (26, 28) aufweist und an seinem zweiten Ende durch mindestens ein Profil (9) mit der C-förmigen Aussparung (7) verbunden ist
**dadurch gekennzeichnet,**
**dass** das Profil als ein Elastomerprofil (9) ausgebildet ist, das formschlüssig in der C-förmigen Aussparung (7) des Fahrzeugs (2, 3) einliegt.

2. Übergang nach Anspruch 1,
**dadurch gekennzeichnet,**
**dass** das zweite Ende des Winkelprofils (11, 13) nach Art eines Keders ausgebildet ist, und mit dem Elastomerprofil (9) verbunden ist.

3. Übergang nach einem der voranstehenden Ansprüche,
**dadurch gekennzeichnet,**
**dass** das Winkelprofil (11, 13) an seinem zweiten Ende einen Steg (17, 18) aufweist, an den sich winklig dazu ein Schenkel (14, 15) mit der klammerartigen Klaue (20, 21) für den Balg anschließt.

4. Übergang nach Anspruch 3,
**dadurch gekennzeichnet,**
**dass** der Steg (17, 18) eine wulstartige Verdickung (29, 30) aufweist, der in einer entsprechenden Öffnung (10) im Elastomerprofil (9) einliegt.

5. Übergang nach Anspruch 4,
**dadurch gekennzeichnet,**
**dass** die Öffnung (10) im Elastomerprofil (9) den Steg (17, 18) mit erfasst.

6. Übergang nach einem der voranstehenden Ansprüche,
**dadurch gekennzeichnet,**
**dass** das mindestens eine Elastomerprofil (9) zwei gleichartige Öffnungen (10) zur Aufnahme jeweils eines Steges (17, 18) mit jeweils endseitiger wulstartiger Verdickung (29, 30) von zwei Winkelprofilen (11, 13) für jeweils einen Balg (26, 28) aufweist.

7. Übergang nach einem der voranstehenden Ansprüche,
**dadurch gekennzeichnet,**
**dass** das mindestens eine Winkelprofil (11, 13) ein zweites Mittel zur Erfassung mindestens eines weiteren Balges (26, 28) aufweist.

8. Übergang nach Anspruch 7,
**dadurch gekennzeichnet,**
**dass** das zweite Mittel derart an dem Schenkel (14, 15) des Winkelprofils (11, 13) angebracht ist, dass die beiden Bälge (26, 28) des Doppelwellenbalges ineinander verschachtelt sind.

9. Übergang nach einem der voranstehenden Ansprüche,
**dadurch gekennzeichnet,**
**dass** das Mittel zur Erfassung des mindestens einen Balges (26, 28) als eine klammerartige Klaue (20, 21, 21a) ausgebildet ist.

## Claims

1. A gangway (5) between two vehicles (2, 3) that are articulately connected with one another, the gangway (5) comprising at least one tunnel-shaped circumferential bellows (26, 28), a connection device being provided for connecting the bellows (26, 28) with the front side of a vehicle (2, 3), the connecting device comprising a tunnel-shaped circumferential recess (7) with an approximately C-shaped cross-section arranged at the front side of the vehicle (2, 3), wherein at least one angled profile (11, 13) is provided, which comprises, at its first free end, means for seizing the at least one bellows (26, 28) and which is connected at its second end with the C-shaped recess (7) by way of at least one profile (9),
**characterized in that**
the profile is formed as an elastomeric profile (9) that rests in a form-locked manner in the C-shaped recess (7) of the vehicle (2, 3).

2. The gangway according to claim 1,
**characterized in that**
the second end of the angled profile (11, 13) is formed in the manner of a keder and is connected with the elastomeric profile (9).

3. The gangway according to one of the afore-mentioned claims,
**characterized in that**
the angled profile (11, 13) comprises a web (17, 18) at its second end, with which a limb (14, 15), having the bracket-like clamp (20, 21) for the bellows, is joined at an angle.

4. The gangway according to claim 3,
**characterized in that**
the web (17, 18) comprises a bulge-like thickening (29, 30), which rests in a corresponding opening (10) in the elastomeric profile (9).

5. The gangway according to claim 4,
**characterized in that**
the opening (10) in the elastomeric profile (9) seizes the web (17, 18).

6. The gangway according to one of the afore-mentioned claims,
**characterized in that**
the at least one elastomeric profile (9) comprises two similar openings (10) for receiving respectively one web (17, 18) with a respective end-side bulge-like thickening (29, 30) of two angled profiles (11, 13) for respectively one bellows (26, 28).

7. The gangway according to one of the afore-mentioned claims,
**characterized in that**
the at least one angled profile (11, 13) comprises second means for seizing at least one additional bellows (26, 28).

8. The gangway according to claim 7,
**characterized in that**
the second means is attached to the limb (14, 15) of the angled profile (11, 13) in such a manner that the two bellows (26, 28) of the double corrugated bellows are nested inside one another.

9. The gangway according to one of the afore-mentioned claims,
**characterized in that**
the means for seizing the at least one bellows (26, 28) is formed as a bracket-like clamp (20, 21, 21a).

## Revendications

1. Passage (5) entre deux véhicules (2, 3) reliés de manière articulée, le passage (5) comprenant au moins un soufflet (26, 28) en forme de tunnel circonférentiel, un dispositif de raccordement étant fourni pour raccorder le soufflet (26, 28) avec le côté frontal d'un véhicule (2, 3), le dispositif de raccordement comportant un évidement (7) en forme de tunnel circonférentiel ayant une section transversale approximativement en forme de C disposé au niveau du côté frontal du véhicule (2, 3), où au moins un profilé en équerre (11, 13) est mis à disposition comportant des moyens pour saisir à sa première extrémité libre l'au moins un soufflet (26, 23) et est raccordé à sa seconde extrémité avec l'évidement (7) en forme de C par au moins un profilé (9),
**caractérisé en ce que**
le profilé prend la forme d'un profilé en élastomère (9) qui repose par liaison de forme dans l'évidement (7) en forme de C du véhicule (2, 3).

2. Passage selon la revendication 1,
**caractérisé en ce que**
la seconde extrémité du profilé en équerre (11, 13) est formée à la manière d'un bourrelet et est raccordée au profilé en élastomère (9).

3. Passage selon l'une des revendications précédentes,
**caractérisé en ce que**
le profilé en équerre (11, 13) comporte une âme (17, 18) à sa seconde extrémité, à laquelle se raccorde de manière angulaire une aile (14, 15) avec la griffe en forme d'agrafe (20, 21) pour le soufflet.

4. Passage selon la revendication 3,
**caractérisé en ce que**
l'âme (17, 18) comporte un épaississement en bourrelet (29, 30) qui repose dans une ouverture correspondante (10) dans le profilé en élastomère (9).

5. Passage selon la revendication 4,
**caractérisé en ce que**
l'ouverture (10) dans le profilé en élastomère (9) saisit l'âme (17, 18).

6. Passage selon l'une des revendications précédentes,
**caractérisé en ce que**
l'au moins un profilé en élastomère (9) comporte deux ouvertures similaires (10) pour recevoir respectivement une âme (17, 18) avec à leur extrémité respective un épaississement en bourrelet (29, 30) de deux profilés en équerre (11, 13) pour respectivement un soufflet (26, 28).

7. Passage selon l'une des revendications précédentes,
**caractérisé en ce que**
l'au moins un profilé en équerre (11, 13) comporte un second moyen pour saisir au moins un soufflet (26, 28) supplémentaire.

8. Passage selon la revendication 7,
**caractérisé en ce que**
le second moyen est attaché à l'aile (14, 15) du profilé en équerre (11, 13) de telle manière que les deux soufflets (26, 28) du double soufflet ondulé sont emboîtés l'un dans l'autre.

9. Passage selon l'une des revendications précédentes,
**caractérisé en ce que**
le moyen pour saisir l'au moins un soufflet (26, 28) prend la forme d'une griffe en forme d'agrafe (20, 21, 21a).
